(19) Europäisches Patentamt
European Patent Office
Office européen des brevets

(11) **EP 3 109 722 B1**

(12) **FASCICULE DE BREVET EUROPEEN**

(45) Date de publication et mention
de la délivrance du brevet:
**23.10.2019 Bulletin 2019/43**

(51) Int Cl.:
***B64G 1/24*** *(2006.01)*      ***B64G 1/36*** *(2006.01)*
***G08G 5/00*** *(2006.01)*

(21) Numéro de dépôt: **16176230.7**

(22) Date de dépôt: **24.06.2016**

(54) **PROCÉDÉ D'ÉVITEMENT D'UNE ZONE INTERDITE PAR UN SATELLITE**

**VERFAHREN ZUM VERMEIDEN EINER VERBOTENEN ZONE DURCH EINEN SATELLITEN**

**METHOD FOR AVOIDING A FORBIDDEN AREA BY A SATELLITE**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **24.06.2015 FR 1555802**

(43) Date de publication de la demande:
**28.12.2016 Bulletin 2016/52**

(73) Titulaire: **CENTRE NATIONAL D'ETUDES
SPATIALES
75001 Paris (FR)**

(72) Inventeurs:
• **THERET, Nicolas
31650 Lauzerville (FR)**

• **LASSALLE-BALIER, Gérard
31750 Escalquens (FR)**

(74) Mandataire: **Delorme, Nicolas et al
Cabinet Germain & Maureau
12, rue Boileau
BP 6153
69466 Lyon Cedex 06 (FR)**

(56) Documents cités:
**WO-A1-00/39650      WO-A1-00/48049
WO-A1-97/47945      WO-A1-97/47947
FR-A1- 2 826 470     FR-A1- 2 969 753**

**EP 3 109 722 B1**

**Description**

DOMAINE TECHNIQUE GENERAL

L'invention concerne un procédé de calcul de manoeuvres d'attitude, d'un état de départ à un état d'arrivée, sous contrainte de directions de pointage à éviter, pour un satellite pouvant s'orienter selon trois axes.

ETAT DE LA TECHNIQUE

Au cours de leur vie, les satellites ont constamment besoin de modifier leur orientation dans l'espace au cours de manoeuvres.

Dans le cas d'un satellite, au cours de son orbite autour de la terre ce dernier peut faire pointer ses instruments vers des zones dangereuses pour ces derniers. Ces zones sont par exemple le Soleil qui peut éblouir la caméra, les senseurs stellaires et les endommager ou bien encore la Terre ou la Lune qui sont trop lumineux par rapport aux étoiles et qui peuvent donc perturber la mesure réalisée par ces senseurs. En effet, les senseurs stellaires permettent de déterminer l'attitude du satellite par comparaison à une bibliothèque d'images du ciel. Par conséquent, un senseur stellaire doit pointer vers les étoiles à tout moment. S'il venait à s'orienter vers la Terre, son information serait indisponible et l'attitude du satellite deviendrait impossible à déterminer.

De plus, si un senseur venait à s'orienter vers le Soleil ou la Lune, l'éblouissement serait trop fort pour permettre une bonne reconnaissance des aux alentours. L'attitude est définie comme la direction des axes d'un engin spatial par rapport à un trièdre de référence. Ce vocabulaire est habituellement utilisé pour les satellites, mais aussi pour les robots se déplaçant dans l'espace, espace géométrique qui nous entoure, tant au sol qu'en l'air (drone).

Dans le cas des satellites, une solution actuellement mise en oeuvre est de rendre indisponible la mission lorsque ce dernier pointe vers ces zones : cette stratégie consiste donc à activer des surveillances à bord pour interrompre la mission, ce qui est très pénalisant pour celle-ci. On cherche donc alors, par construction, à éviter ces situations, quitte à désoptimiser la mission et à rejeter des solutions de guidage autonome. On peut aussi rejeter par avance certains pointages risquant de poser problème, ce qui conduit à réduire les possibilités de la mission.

Le document FR2826470 divulgue des procédés et dispositifs permettant de piloter l'attitude d'un satellite.

PRESENTATION DE L'INVENTION

L'invention propose de pallier les inconvénients pré-cités en permettant au satellite d'éviter des zones interdites susceptibles d'endommager ou de perturber des instruments des satellites tels que les caméras et les senseurs stellaires.

A cet effet, l'invention propose un procédé selon la revendication 1

L'invention est avantageusement complétée par les caractéristiques suivantes, prises seules ou en une quelconque de leur combinaison techniquement possible.

Un axe de pointage suit au cours d'une manoeuvre une trajectoire sphérique sur une sphère d'attitudes ayant pour centre le satellite, la zone interdite étant circulaire, la détermination du point d'évitement consistant à déterminer deux tangentes à la zone interdite à partir du point de départ et à partir du point d'arrivée, l'intersection des deux tangentes ainsi déterminées étant le point d'évitement.

Le procédé comprend une étape E2) de vérification que le point d'évitement situé à l'intersection des tangentes n'est pas trop éloigné de la zone interdite, c'est-à-dire, de préférence, que la distance entre le point d'évitement et le centre de la zone interdite n'est pas supérieure à deux fois le rayon de la zone interdite typiquement 1,5 fois le rayon de zone interdite.

Si le point d'évitement est trop éloigné de la zone interdite, le procédé comprend une étape E3) de détermination de deux points d'évitements supplémentaires chacun étant situé sur les tangentes déterminées, le procédé comprenant une étape E4) de détermination d'un autre point d'évitement à l'intersection entre des tangentes à partir respectivement de chaque point d'évitement supplémentaire, l'intersection de ces deux tangentes étant l'autre point d'évitement, et ce de façon récursive jusqu'à déterminer un nombre de points intermédiaires suffisant.

Les points d'évitements supplémentaires sont situés à une égale distance du centre de la zone interdite multiplié par un coefficient intermédiaire, le coefficient intermédiaire étant tel que la trajectoire d'évitement de l'axe de pointage de l'instrument passant par ces points supplémentaires reste toujours convexe.

Le procédé comprend une étape de détection d'une zone interdite consistant à calculer sur la sphère d'attitudes, un écart angulaire entre l'axe de pointage au point de départ et le centre d'une zone interdite, une zone interdite étant détectée dès lors que l'écart angulaire est inférieur ou égal au rayon de la zone interdite.

La détermination des manoeuvres d'attitude du satellite pour que l'axe de pointage d'un instrument du satellite suive la trajectoire d'évitement consiste à déterminer les coordonnées du point d'évitement, les attitudes du satellite aux points de départ et d'arrivée ainsi qu'audit au moins un point d'évitement, lesdites attitudes étant définies par des quaternions d'attitude aux points de départ et d'évitement et par une vitesse et une accélération à ces points.

La vitesse au point d'évitement est non nulle.

La sélection de l'enchaînement de manoeuvre parmi les manoeuvres déterminées consiste à sélectionner, selon un premier critère, l'enchaînement le plus rapide ou à sélectionner, selon un second critère, l'enchaînement qui implique des contraintes matérielles les plus faibles ou bien un compromis des premier et second critères.

Si la trajectoire d'évitement obtenue est telle qu'un axe de visée pointe vers une autre zone interdite, le procédé comprend une répétition des étapes E1) à E6), et éventuellement récursive, avec une trajectoire initiale en considérant ainsi deux nouvelles manoeuvres successives indépendantes, faisant passer par le point d'évitement préalablement obtenu.

L'invention concerne également un système d'évitement d'une zone interdite comprenant un processeur configuré pour mettre en oeuvre un procédé selon l'invention.

## PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :

La figure 1 illustre un satellite comprenant plusieurs instruments ;
La figure 2a illustre une zone interdite ainsi qu'une trajectoire d'évitement, projetées dans un plan ;
La figure 2b illustre une zone interdite avec des marges d'erreurs ;
La figure 3 illustre une sphère d'attitudes ayant pour centre un satellite ;
La figure 4 illustre un système d'évitement d'une zone interdite ;
La figure 5 illustre des étapes d'un procédé d'évitement d'une zone interdite ;
La figure 6 illustre une zone interdite avec outre un point d'évitement, des points d'évitement supplémentaires ;
La figure 7 illustre plusieurs zones interdites ainsi que la trajectoire d'évitement correspondante ;
La figure 8 illustre la détermination des coordonnées d'un point d'évitement ;
Les figures 9a et 9b illustrent respectivement une trajectoire d'évitement avec une vitesse nulle et non nulle aux points d'évitement. Sur l'ensemble des figures, les éléments similaires portent des références identiques.

## DESCRIPTION DETAILLEE DE L'INVENTION

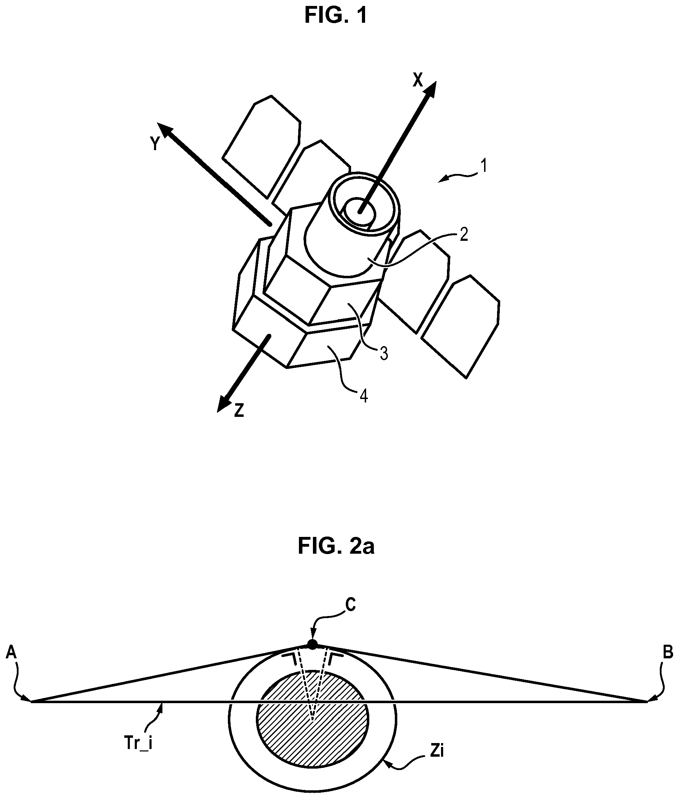

On a représenté sur la figure 1, un satellite 1 comprenant plusieurs instruments 2, 3, 4, chacun ayant un axe de pointage x, y, z, l'instrument pointant selon cet axe de pointage.

En relation avec la figure 2a, au cours d'une manoeuvre initiale telle qu'un axe de pointage d'un instrument du satellite suit une trajectoire initiale Tr pour aller d'un point de départ A à un point d'arrivée B, un axe de pointage peut pointer vers une zone interdite Zi. La zone interdite Zi est composée de la zone interdite en tant que telle (zone centrale sur la figure 23, le Soleil ou la Lune par exemple) entourée d'une marge d'erreur. Dans ce qui suit on utilisera la notion de zone interdite Zi pour englober à la fois la zone en tant que telle et la marge d'erreur.

Dans ce qui suit, on considère que les directions de visée des instruments du satellite sont projetées sur une sphère d'attitude. Chaque point de cette sphère correspond à une direction normée dans le repère inertiel. Une trajectoire d'attitude sur la sphère est ainsi obtenue pour chaque axe de pointage d'un instrument.

On définit ainsi une sphère d'attitude de centre le satellite sur laquelle on représente des zones interdites. Cette sphère se déplace à mesure que le satellite se déplace sur son orbite.

On entend donc ici par zone interdite, l'ensemble des directions que le satellite doit éviter pour le bon fonctionnement de ses instruments. Ces attitudes interdites sont, à titre d'exemples non limitatifs, les directions d'astres soit suffisamment gros (la Terre) pour gêner les senseurs stellaires permettant au satellite de connaître son orientation à tout moment en se repérant par rapport aux étoiles, soit trop lumineux (le Soleil, la Lune) et qui par conséquent menacent d'endommager des instruments sensibles ou d'éblouir les senseurs stellaires.

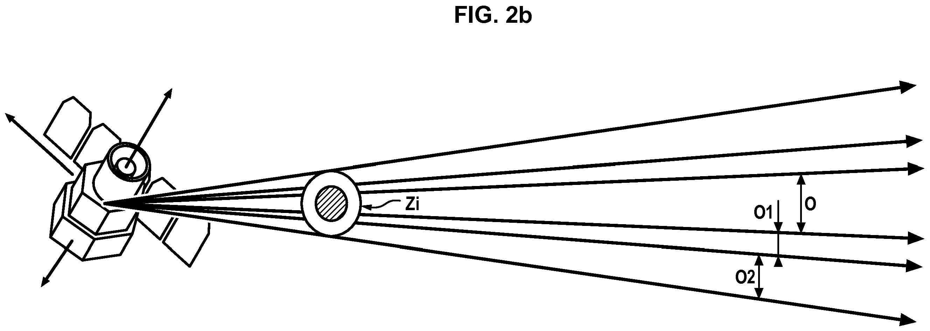

On considère que les zones interdites sont sphériques de sorte que les formes irrégulières de la Terre ou de la Lune sont négligées. Ainsi, les zones interdites sont représentées par des cercles. La figure 2b illustre une zone interdite Zi englobant la zone interdite en tant que telle augmentée du demi-champ de vue de l'instrument o1, puis encore d'une marge o2 de fonctionnement prédéterminée (typiquement 15%). Sur cette figure 2b, le satellite présente une ouverture o.

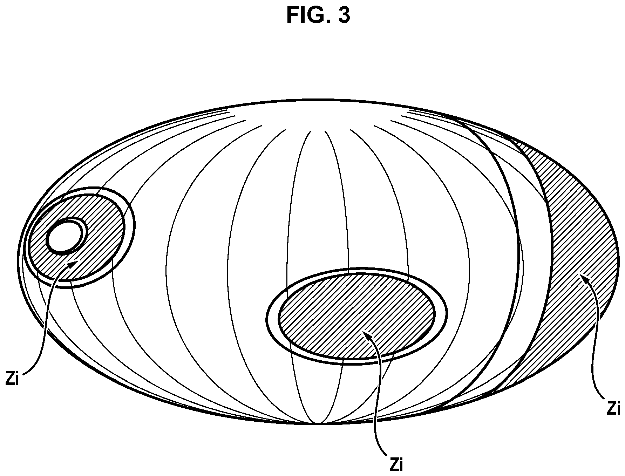

On a représenté sur la figure 3, une sphère d'attitude sur laquelle quatre zones interdites Zi sont représentées. On note à nouveau que les zones interdites comprennent deux cercles concentriques. Le plus grand cercle correspond à une marge de sécurité dans la définition des zones interdites. Les zones concentriques correspondent à un même perturbateur, mais pour des instruments différents (on visualise ainsi la différence de demi-champ de vue entre les instruments).

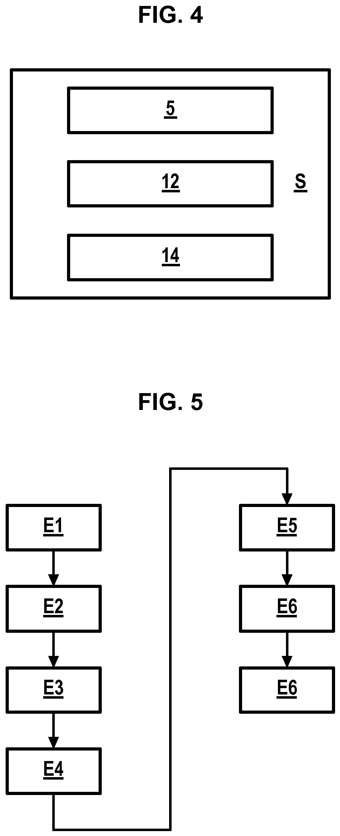

Afin qu'au cours d'une manoeuvre, un instrument ne pointe pas vers une zone interdite, un procédé de détermination d'au moins une manoeuvre d'un satellite est mis en oeuvre dans un système de détermination d'au moins une manoeuvre d'un satellite tel que décrit sur la figure 4.

Ce système S est configuré pour mettre en oeuvre un procédé de détermination d'au moins une manoeuvre d'un satellite décrit ci-après. Ce système comprend un processeur 5 et une mémoire 12. La mémoire 12 stocke des manoeuvres initiales et un logiciel qui contrôle le processeur pour qu'il mette en oeuvre le procédé de détermination d'un ensemble de mailles. Le système S comprend, le cas échéant, un outil 14 d'interaction avec un utilisateur, permettant à un opérateur d'y rentrer des données ou de paramétrer le logiciel. Il s'agit par exemple d'un clavier associé à un écran.

En relation avec la figure 5, un procédé de détermination d'au moins une manoeuvre d'un satellite comprend d'abord une étape E0 de détection d'une zone interdite Zi consistant à calculer sur la sphère d'attitudes, un écart angulaire entre l'axe de pointage d'un instrument du satellite au point de départ A et le centre d'une zone interdite Zi.

De manière avantageuse, une zone interdite Zi est détectée dès lors que l'écart angulaire est inférieur ou égal au rayon de la zone interdite Zi.

Ensuite, le procédé comprend une étape E1 de détermination d'au moins un point dit d'évitement C, tel qu'une trajectoire d'évitement A-C-B de l'axe de pointage d'un instrument du satellite dévie de la trajectoire initiale A-B en passant par le point d'évitement C pour éviter la zone interdite.

De manière avantageuse, la trajectoire de l'axe de pointage au cours d'une manoeuvre étant approximé au premier ordre par une trajectoire sphérique sur la sphère d'attitudes ayant pour centre le satellite, et la zone interdite étant circulaire, la détermination E1 du point d'évitement consiste à déterminer deux tangentes (courbe AC) à la zone interdite Zi à partir du point de départ A et à partir du point d'arrivée B (courbe BC), l'intersection des deux tangentes ainsi déterminées étant le point d'évitement C. Plus précisément, il existe deux solutions possibles, de part et d'autre de la zone interdite Zi. Les deux solutions seront testées pour réaliser la manoeuvre avec évitement.

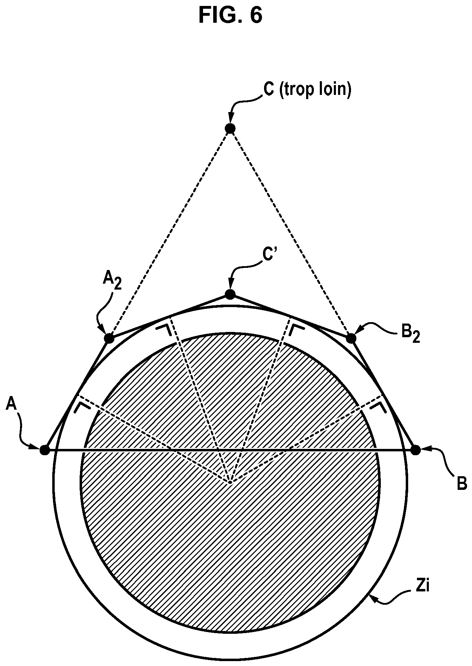

Dans certains cas, les points de départ et/ou d'arrivée sont très proches de la zone interdite (voir la figure 6).

Ainsi, le procédé comprend avantageusement une étape E2 de vérification que le point d'évitement C situé à l'intersection des tangentes AC, BC et n'est pas trop éloigné de la zone interdite Z.

En particulier, au cours de cette étape on vérifie que la distance entre le point d'évitement C précédemment déterminé et le centre de la zone interdite Zi n'est pas supérieure à deux fois le rayon de la zone interdite Zi typiquement 1,5 fois le rayon de zone interdite Zi.

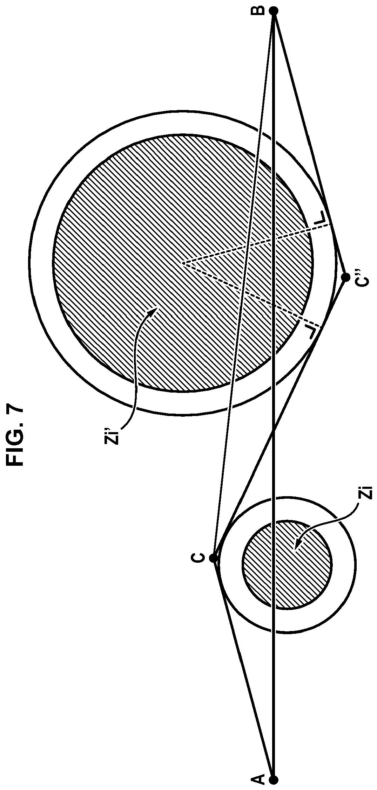

Et s'il s'avère que le point d'évitement C est trop éloigné de la zone interdite, le procédé comprend une étape de détermination E3 de deux points d'évitements supplémentaires A2, B2 chacun étant situé sur les tangentes déterminées (tangentes AC et BC sur la figure 7), suivie d'une étape E4 de détermination d'un autre point d'évitement C' à l'intersection entre des tangentes à partir respectivement de chaque point d'évitement supplémentaire (courbes AA2et BB2), l'intersection de ces deux tangentes étant l'autre point d'évitement.

De cette manière, la trajectoire de l'axe de visée d'un instrument du satellite contourne la zone interdite Zi de plus près. On note que les étapes E3 et E4 peuvent être répétées jusqu'à obtenir une trajectoire d'évitement proche de la zone interdite Zi et ce de façon récursive jusqu'à déterminer un nombre de points intermédiaires suffisant pour épouser au mieux la zone interdite Zi.

Une fois la trajectoire d'évitement obtenue, celle-ci peut conduire à ce qu'un axe de visée d'un instrument du satellite pointe vers une autre zone interdite Zi' (voir la figure 7) en allant du point de départ A (ou d'un point intermédiaire) au point d'arrivée B (ou à un point intermédiaire). Dans ce cas, les étapes ci-dessus décrites sont répétées de façon récursive, chaque manoeuvre d'un point au suivant étant considéré comme une nouvelle manoeuvre à part entière, pour obtenir un autre point d'évitement C'. Dans ce cas, le nouveau point de départ est le point C et le nouveau point d'arrivée est le point B.

Une fois la trajectoire d'évitement déterminée et de fait le ou les points d'évitement, le procédé comprend une étape E5 de détermination des manoeuvres du satellite permettant à l'axe de pointage de suivre la trajectoire d'évitement et enfin le procédé comprend une étape de sélection E6, parmi les manoeuvres déterminées, en fonction du sens de contournement de la ou des zones interdites, du meilleur enchaînement de manoeuvres à réaliser.

De manière avantageuse, la sélection E6 de l'enchaînement de manoeuvres parmi les manoeuvres déterminées consiste à sélectionner, selon un premier critère, l'enchaînement le plus rapide ou à sélectionner, selon un second critère, l'enchaînement qui implique des contraintes matérielles les plus faibles ou bien un compromis des premier et second critères.

Afin de déterminer la manoeuvre du satellite entre deux attitudes définies par des conditions statiques (c'est-à-dire par des quaternions d'attitude) et cinématiques (conditions sur les vitesses, accélérations et jerks angulaires) aux extrémités de la manoeuvre (entre le point de départ A et le point d'arrivée), le procédé utilise un moyen externe de calcul de trajectoire. A titre d'illustration, il est possible d'utiliser l'algorithme nommé MANiac (MANoeuvre Imposée en Attitude sous Contraintes) développé par le Centre National d'Etudes Spatiales (CNES). A ce titre, on pourra se référer au document : Parraud, A. Flipo, J. Jaubert, and G. Lassalle-Balier : « Computing smooth attitude guidance laws for homing maneuvers ». In International Symposium on Space Technology and Science, Kanazawa, Japan, 2006.

En particulier, l'étape de détermination des manoeuvres consiste à déterminer les coordonnées du point d'évitement, les attitudes du satellite aux points de départ et d'arrivée ainsi qu'audit au moins un point d'évitement, lesdites attitudes étant définies par des quaternions d'attitude aux points de départ et d'évitement et par une vitesse et une accélération à ces points.

En effet, un quaternion décrit l'attitude du satellite à un instant donné, c'est-à-dire la rotation de son repère par rapport au repère inertiel. En outre, les quaternions d'attitudes permettent de déterminer l'évolution de l'attitude du satellite durant une manoeuvre et par conséquent la direction de visée d'un instrument.

Afin de déterminer la manoeuvre du satellite qui correspond à la trajectoire d'évitement de l'axe de pointage, il s'agit de déterminer les quaternions d'attitudes des points de départ A et d'arrivée B et au point d'évitement C.

Pour ce faire, il convient de déterminer les coordonnées des points intermédiaires sur la sphère d'attitude et des coordonnées des points de départ A et d'arrivée B.

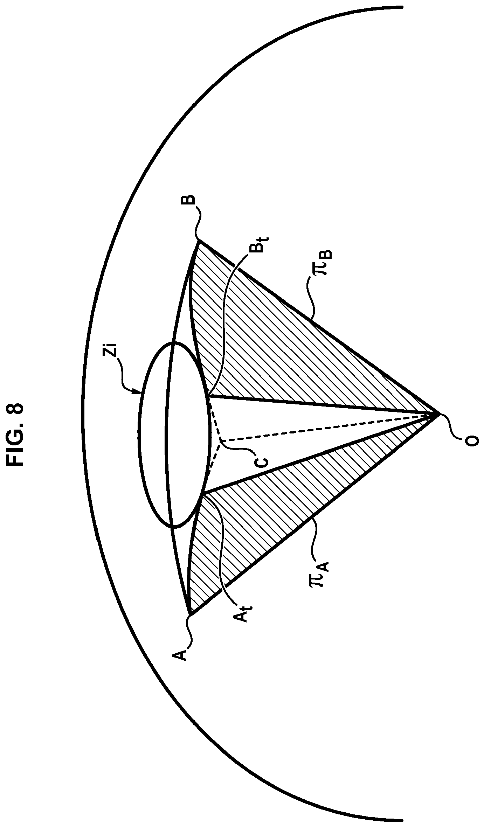

On décrit ci-après la détermination des coordonnées d'un point d'évitement C, en relation avec la figure 8.

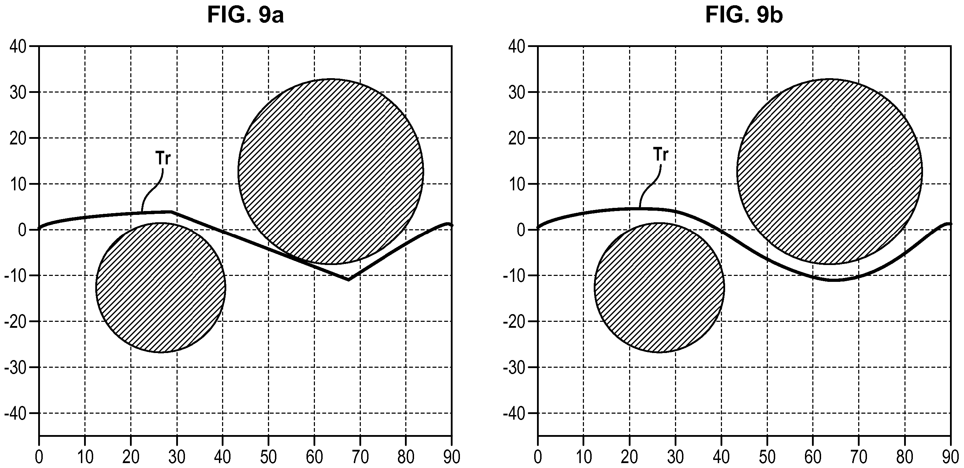

Le chemin le plus court entre deux points sur une sphère est l'arc de grand cercle c'est-à-dire le géodésique. Il s'agit ici de déterminer les géodésiques issues du point de départ A et du point d'arrivée B et tangentes à la zone interdite Zi (aux ponts At et Bt sur la figure 9). Le point d'évitement C est à l'intersection des tangentes. Plus précisément, il y a deux points de tangence, de part et d'autre de la zone interdite. Dans la suite on s'intéresse explicitement à l'un d'entre eux appelé C, mais il existe aussi un autre point similaire, qui donnera lieu également à un calcul de manoeuvre globale.

Afin de déterminer les coordonnées du point d'évitement C, il est nécessaire de déterminer des équations des deux géodésiques. Pour ce faire, on détermine les équations de deux plans πA et πB contenant les deux tangentes.

Pour définir l'équation d'un plan, il suffit d'en connaitre trois points. On connait ici deux points :

Le centre de la sphère unité O = (XO, YO, ZO) = (0,0,0) ;
Le point de départ A = (XA, YA, ZA) ou d'arrivée B = (XB, YB, ZB).

Le troisième point à déterminer est le point de tangence At=(XAt, YAt, ZAt) en partant du point de départ A ou Bt= (XBt, YBt, ZBt) en partant du point d'arrivée B.

A partir de ces trois points, on obtient les équations du plan πA et du plan πB en calculant un déterminant : π A ≡ X - X 0 Y - Y 0 Z - Z 0 X A Y A Z A X A t Y A t Z A t = X Y Z X A Y A Z A X A t Y A t Z A t = 0 ⇒ Y A Z A t - Z A Y A t X + Z A X A t - X A Z A t Y + X A Y A t - Y A X A t Z = 0 ⇒ α A X + β A Y + γ A Z = 0
Dessins disponibles sous "Document original"
π B ≡ X - X 0 Y - Y 0 Z - Z 0 X B Y B Z B X B t Y B t Z B t = X Y Z X B Y B Z B X B t Y B t Z B t = 0 ⇒ Y B Z B t - Z B Y B t X + Z B X B t - X B Z B t Y + X B Y B t - YB X B t Z = 0 ⇒ α B X + β B Y + γ B Z = 0Dessins disponibles sous "Document original"
En outre, l'intersection des deux plans donne une droite (les plans n'étant pas parallèles). Cette droite passe par le centre de la sphère d'équation X<2>+Z<2>+Z<2>=1 et compte ainsi deux intersections avec celle-ci. Pour trouver ces intersections, on résout le système de trois équations à trois inconnues : { α A X+ β A Y + γ A Z = 0 α B X+ β B Y + γ B Z =0 X 2 + Y 2 + Z 2 = 1
Dessins disponibles sous "Document original"
Ce système donne deux solutions, puisque les géodésiques tangentes à une zone interdite se croisent en deux points de la sphère. La solution la plus proche du centre de la zone étudiée est le point C = (XC, YC, ZC). L'autre point C* est à l'opposé de la sphère d'attitudes par rapport à la zone interdite Zi à éviter, on retient le point C.

Les points de tangences At et Bt permettent de déterminer les coordonnées du point d'évitement C en faisant appel à la géométrie sphérique. Concernant l'axe de « lacet », il convient de répartir la rotation entre A et B de façon proportionnelle, en fonction de l'angle de dépointage entre A et C d'une part, puis entre C et B d'autre part.

On considère :

ptA : les coordonnées sur la sphère du point de départ A
ptB : les coordonnées sur la sphère du point d'arrivée B
ptC : les coordonnées sur la sphère du point intermédiaire C
QA : le quaternion d'attitude au point de départ A
QB : le quaternion d'attitude au point d'arrivée B
QC : le quaternion d'attitude du point intermédiaire
ωC : la vitesse angulaire du point intermédiaire C

Pour obtenir le quaternion d'attitude du point intermédiaire C et la vitesse angulaire du point intermédiaire C on met en oeuvre les calculs suivants :

1.

$$\theta AC = a \cos (ptA \cdot ptC)$$

2.

$$\theta BC = a \cos (ptB \cdot ptC)$$

3.

$$\alpha = \theta\,AC\,\theta\,AC + \theta\,BC$$

Dessins disponibles sous "Document original"

4.

$$.nAC = \text{normalisation } deptA \wedge ptC$$

5.

$$nBC = \text{normalisation } deptB \wedge ptC$$

6.

$$Q\,AC = \cos \theta\,AC\,2 \sin \theta\,AC\,2 \cdot n \rightarrow AC$$

Dessins disponibles sous "Document original"

7.

$$Q\,BC = \cos \theta\,BC\,2 \sin \theta\,BC\,2 \cdot n \rightarrow BC$$

Dessins disponibles sous "Document original"

8.

$$Q\,C\,I = Q\,AC \cdot Q\,A$$

Dessins disponibles sous "Document original"

9.

$$Q\,C\,II = Q\,BC \cdot Q\,B$$

Dessins disponibles sous "Document original"

10.

$$Q\,rot\,I - II = Q\,C\,II \cdot Q\,C\,\Gamma$$

Dessins disponibles sous "Document original"

11. Calcul de Q rot total
Dessins disponibles sous "Document original"
eturotC, associés à Q rot I - II ,
Dessins disponibles sous "Document original"
de la manière suivante : soit Q rot I - II = Q 1 Q 2 Q 3 Q 4Dessins disponibles sous "Document original"

11.1.

$$SI\,(/Q1\,/\,=1\,)ALORS$$

11.1.1. $\theta$ rot total
Dessins disponibles sous "Document original"

11.1.2.

$$u \rightarrow rotC = 1\,0\,0$$

Dessins disponibles sous "Document original"

11.2. SINON

11.2.1.

$$\sin \theta\,rot\,total\,2 = Q\,2\,2 + Q\,3\,2 + Q\,4\,2$$

Dessins disponibles sous "Document original"

11.2.2.

$$\theta\,rot\,total = 2 \cdot a\,\sin \sin \theta\,rot\,total\,2$$

Dessins disponibles sous "Document original"

11.2.3.

$$u \rightarrow = 1\,\sin \theta\,rot\,total\,2\,Q\,2\,Q\,3\,Q\,4$$

Dessins disponibles sous "Document original"

11.3. FIN SI

12.

$$\theta\,rotC = \theta\,rot\,total \cdot \alpha$$

Dessins disponibles sous "Document original"

13.

$$Q\ rotC = \cos\theta\ rotC\ 2\ \sin\theta\ rotC\ 2 \cdot n \rightarrow rotC$$

Dessins disponibles sous "Document original"

14.

$$QC = QrotC \cdot QAC \cdot QA$$

15.

$$\omega C = (1-\alpha).\omega A + \alpha \cdot \omega B$$

On note que l'on peut fixer une vitesse angulaire nulle au point intermédiaire C. Toutefois, la prise en compte d'une vitesse non nulle en ce point permet d'obtenir une trajectoire d'évitement qui est meilleure. Les figures 9a et 9b illustrent respectivement une trajectoire Tr d'évitement avec une vitesse nulle et non nulle aux points d'évitement et non nulle. On constate les différences de trajectoire au niveau des points d'évitement. Le temps de la manoeuvre globale est réduit de façon significative.

**Revendications**

1.　Procédé de calcul de manoeuvres d'attitude d'un satellite comprenant au moins un instrument pointant selon un axe de pointage, sous contrainte de directions de pointage à éviter qui correspondent à au moins une zone interdite vers laquelle un instrument du satellite pointe selon un axe de pointage en suivant une trajectoire initiale dite non contrainte allant d'un point de départ (A) à un point d'arrivée (B), le procédé comprenant des étapes de
E1) détermination (E1) d'au moins un point dit d'évitement (C), tel qu'une trajectoire d'évitement (A-C-B) de l'axe de pointage dévie de la trajectoire initiale (A-B) en passant par le point d'évitement (C) pour éviter la zone interdite ;
E5) détermination (E5) des manoeuvres d'attitude du satellite permettant à l'axe de pointage de suivre la trajectoire (A-C-B) d'évitement, lesdites attitudes étant définies par des quaternions d'attitude aux points de départ (A) et d'évitement (C) et par une vitesse et une accélération à ces points, les quaternions décrivant l'attitude du satellite à un instant donné c'est-à-dire la rotation du repère du satellite par rapport à un repère inertiel.
E6) sélection (E6), parmi les manoeuvres déterminées, en fonction du sens de contournement de la ou des zones interdites, du meilleur enchaînement de manoeuvres à réaliser.

2.　Procédé selon la revendication 1, dans lequel l'axe de pointage suit au cours d'une manoeuvre une trajectoire sphérique sur une sphère d'attitudes ayant pour centre le satellite, la zone interdite étant circulaire, la détermination (E1) du point d'évitement consistant à déterminer deux tangentes à la zone interdite à partir du point de départ et à partir du point d'arrivée, l'intersection des deux tangentes ainsi déterminées étant le point d'évitement.

3.　Procédé selon la revendication précédente, comprenant une étape E2) de vérification (E2) que le point d'évitement situé à l'intersection des tangentes n'est pas trop éloigné de la zone interdite, c'est-à-dire, de préférence, que la distance entre le point d'évitement et le centre de la zone interdite n'est pas supérieure à deux fois le rayon de la zone interdite typiquement 1,5 fois le rayon de zone interdite.

4.　Procédé selon la revendication précédente, dans lequel si le point d'évitement est trop éloigné de la zone interdite, le procédé comprend une étape E3) de détermination (E3) de deux points d'évitements supplémentaires (A2, B2) chacun étant situé sur les tangentes déterminées, le procédé comprenant une étape E4) de détermination (E4) d'un autre point d'évitement à l'intersection entre des tangentes à partir respectivement de chaque point d'évitement supplémentaire, l'intersection de ces deux tangentes étant l'autre point d'évitement, et ce de façon récursive jusqu'à déterminer un nombre de points intermédiaires suffisant.

5.　Procédé selon la revendication 4, dans lequel les points d'évitements supplémentaires (A2, B2) sont situés à une égale distance du centre de la zone interdite multiplié par un coefficient intermédiaire, le coefficient intermédiaire étant tel que la trajectoire d'évitement passant par ces points supplémentaires reste toujours convexe.

6. Procédé selon l'une des revendications 2 à 5, comprenant une étape de détection (E0) d'une zone interdite consistant à calculer sur la sphère d'attitudes, un écart angulaire entre l'axe de pointage au point de départ et le centre d'une zone interdite, une zone interdite étant détectée dès lors que l'écart angulaire est inférieur ou égal au rayon de la zone interdite.

7. Procédé selon l'une des revendications 2 à 6, dans lequel la détermination (E5) des manoeuvres du satellite pour que l'axe de pointage suive la trajectoire d'évitement consiste à déterminer les coordonnées du point d'évitement, les attitudes du satellite aux points de départ et d'arrivée ainsi qu'audit au moins un point d'évitement, lesdites attitudes étant définies par des quaternions d'attitude aux points de départ et d'évitement et par une vitesse et une accélération à ces points.

8. Procédé selon la revendication 6, dans lequel la vitesse au point d'évitement (C) est non nulle.

9. Procédé selon l'une des revendications précédentes, dans lequel la sélection (E6) de l'enchaînement de manoeuvre parmi les manoeuvres déterminées consiste à sélectionner, selon un premier critère, l'enchaînement le plus rapide ou à sélectionner, selon un second critère, l'enchaînement qui implique des contraintes matérielles les plus faibles ou bien un compromis des premier et second critères.

10. Procédé selon l'une des revendications précédentes, dans lequel si la trajectoire d'évitement (A-C-B) obtenue est telle qu'un axe de visée pointe vers une autre zone interdite (Zi'), le procédé comprend une répétition des étapes E1) à E6), et éventuellement récursive, avec une trajectoire initiale (A-C, C-B) en considérant ainsi deux nouvelles manoeuvres successives indépendantes, faisant passer par le point d'évitement préalablement obtenu (C).

11. Système d'évitement d'une zone interdite comprenant un processeur (5) configuré pour mettre en oeuvre un procédé selon l'une des revendications précédentes.

**Patentansprüche**

1. Verfahren zur Berechnung von Lagemanövern eines Satelliten, der mindestens ein gemäß einer Zeigeachse zeigendes Instrument umfasst, gezwungen durch auszuweichende Zeigerichtungen, die mindestens einer Sperrzone entsprechen, zu der ein Instrument des Satelliten gemäß einer Zeigeachse einer so genannten ungezwungenen ursprünglichen Bahn folgend zeigt, die von einem Ausgangspunkt (A) zu einem Zielpunkt (B) verläuft, das Verfahren umfassend die Schritte
E1) Bestimmung (E1) von mindestens einem so genannten Ausweichpunkt (C), so dass eine Ausweichbahn (A-C-B) der Zeigeachse von der ursprünglichen Bahn (A-B) abweicht, indem sie durch den Ausweichpunkt (C) verläuft, um der Sperrzone auszuweichen;
E5) Bestimmung (E5) der Lagemanöver des Satelliten, was der Zeigeachse ermöglicht, der Ausweichbahn (A-C-B) zu folgen, wobei die Lagen definiert werden durch Lagequaternionen an dem Ausgangs- (A) und Ausweichpunkt (C) und durch eine Geschwindigkeit und eine Beschleunigung an diesen Punkten, wobei die Quaternionen die Lage des Satelliten zu einem gegebenen Zeitpunkt beschreiben, das heißt die Rotation des Bezugspunktes des Satelliten in Bezug auf einen Trägheitsbezugspunkt;
E6) Auswahl (E6), unter den bestimmten Manövern, in Abhängigkeit von der Umgehungsrichtung der Sperrzone oder Sperrzonen, der besten Abfolge von auszuführenden Manövern.

2. Verfahren nach Anspruch 1, wobei die Zeigeachse während eines Manövers einer kugelförmigen Bahn auf einer Kugel von Lagen folgt, die den Satelliten als Zentrum hat, wobei die Sperrzone kreisrund ist, wobei die Bestimmung (E1) des Ausweichpunktes darin besteht, dass zwei Tangenten zur Sperrzone ausgehend von dem Ausgangspunkt und ausgehend von dem Zielpunkt bestimmt werden, wobei der Schnittpunkt der zwei so bestimmten Tangenten der Ausweichpunkt ist.

3. Verfahren nach dem vorhergehenden Anspruch, umfassend einen Schritt E2) der Verifikation (E2), dass der Ausweichpunkt, der sich an dem Schnittpunkt der Tangenten befindet, nicht zu weit weg ist von der Sperrzone, das heißt, vorzugsweise, dass der Abstand zwischen dem Ausweichpunkt und dem Zentrum der Sperrzone nicht größer ist als der zweifache Radius der Sperrzone, typischerweise der 1,5-fache Radius der Sperrzone.

**4.** Verfahren nach dem vorhergehenden Anspruch, wobei, wenn der Ausweichpunkt von der Sperrzone zu weit weg ist, das Verfahren einen Schritt E3) der Bestimmung (E3) von zwei zusätzlichen Ausweichpunkten (A2, B2) umfasst, die sich jeweils auf den bestimmten Tangenten befinden, das Verfahren umfassend einen Schritt E4) der Bestimmung (E4) eines weiteren Ausweichpunktes an dem Schnittpunkt zwischen den Tangenten ausgehend von jeweils jedem zusätzlichen Ausweichpunkt, wobei der Schnittpunkt dieser zwei Tangenten der weitere Ausweichpunkt ist, und dies in rekursiver Weise bis eine ausreichende Anzahl von Zwischenpunkten bestimmt ist.

**5.** Verfahren nach Anspruch 4, wobei sich die zusätzlichen Ausweichpunkte (A2, B2) in einem gleichen Abstand von dem Zentrum der Sperrzone befinden, multipliziert mit einem Zwischenkoeffizienten, wobei der Zwischenkoeffizient so ist, dass die Ausweichbahn, die durch diese zusätzlichen Punkte verläuft, immer konvex bleibt.

**6.** Verfahren nach einem der Ansprüche 2 bis 5, umfassend einen Schritt der Erkennung (E0) einer Sperrzone, der darin besteht, dass auf der Kugel von Lagen ein Winkelversatz zwischen der Zeigeachse an dem Ausgangspunkt und dem Zentrum einer Sperrzone berechnet wird, wobei eine Sperrzone erkannt wird, sobald der Winkelversatz kleiner oder gleich dem Radius der Sperrzone ist.

**7.** Verfahren nach einem der Ansprüche 2 bis 6, wobei die Bestimmung (E5) der Manöver des Satelliten, damit die Zeigeachse der Ausweichbahn folgt, darin besteht, dass die Koordinaten des Ausweichpunktes, die Lagen des Satelliten an dem Ausgangs- und Zielpunkt sowie an dem mindestens einen Ausweichpunkt bestimmt werden, wobei die Lagen definiert werden durch Lagequaternionen an dem Ausgangs- und Ausweichpunkt und durch eine Geschwindigkeit und eine Beschleunigung an diesen Punkten.

**8.** Verfahren nach Anspruch 6, wobei die Geschwindigkeit an dem Ausweichpunkt (C) nicht null ist.

**9.** Verfahren nach einem der vorstehenden Ansprüche, wobei die Auswahl (E6) der Abfolge von Manövern unter den bestimmten Manövern darin besteht, dass, gemäß einem ersten Kriterium, die schnellste Abfolge ausgewählt wird oder, gemäß einem zweiten Kriterium, die Abfolge ausgewählt wird, die die schwächsten materiellen Beanspruchungen impliziert, oder auch ein Kompromiss aus dem ersten und zweiten Kriterium.

**10.** Verfahren nach einem der vorstehenden Ansprüche, wobei, wenn die erhaltene Ausweichbahn (A-C-B) so ist, dass eine Visierachse zu einer anderen Sperrzone (Zi') zeigt, das Verfahren eine Wiederholung der Schritte E1) bis E6) umfasst, und eventuell rekursiv, mit einer ursprünglichen Bahn (A-C, C-B), unter Einbeziehung von somit zwei neuen unabhängigen aufeinanderfolgenden Manövern, wobei man den zuvor erhaltenen Ausweichpunkt (C) durchlaufen lässt.

**11.** System zum Ausweichen einer Sperrzone, umfassend einen Prozessor (5), der konfiguriert ist, ein Verfahren nach einem der vorstehenden Ansprüche umzusetzen.

**Claims**

**1.** A method for calculating attitude maneuvers of a satellite comprising at least one instrument pointing according to a pointing axis, under constraints of pointing directions to be avoided which correspond to at least one prohibited area towards which an instrument of the satellite points according to a pointing axis following a so-called unconstrained initial trajectory starting from a departure point (A) to an arrival point (B), the method comprising steps of E1) determining (E1) at least one so-called avoidance point (C), such that an avoidance trajectory (A-C-B) of the pointing axis deviates from the initial trajectory (A-B) through the avoidance point (C) in order to avoid the prohibited area;
E5) determining (E5) attitude maneuvers of the satellite enabling the pointing axis to follow the avoidance trajectory (A-C-B), said attitudes being defined by attitude quaternions at the departure (A) and avoidance (C) points and by a velocity and an acceleration at these points, the quaternions describing the attitude of the satellite at a given moment, that is to say the rotation of the reference frame of the satellite relative to an inertial reference frame.
E6) selecting (E6), amongst the determined maneuvers, depending on the direction of bypassing the prohibited area (s), the best sequence of maneuvers to carry out.

**2.** The calculation method according to claim 1, wherein the pointing axis follows during a maneuver a spherical trajectory on a sphere of attitudes centered on the satellite, the prohibited area being circular, the determination (E1) of the avoidance point consisting in determining two tangents to the prohibited area from the departure point and from the arrival point, the intersection of the two tangents thus determined being the avoidance point.

3. The calculation method according to the preceding claim, comprising a step E2) of checking up (E2) that the avoidance point located at the intersection of the tangents is not too far away from the prohibited area, that is to say, preferably, that the distance between the avoidance point and the center of the prohibited area is not larger than twice the radius of the prohibited area, typically 1.5 times the radius of the prohibited area.

4. The calculation method according to the preceding claim, wherein if the avoidance point is too far away from the prohibited area, the method comprises a step E3) of determining (E3) two additional avoidance points (A2, B2) each being located on the determined tangents, the method comprising a step E4) of determining (E4) another avoidance point at the intersection between tangents from respectively each additional avoidance point, the intersection of these two tangents being the other avoidance point, and recursively until determining a sufficient number of intermediate points.

5. The calculation method according to claim 4, wherein the additional avoidance points (A2, B2) are located at an equal distance from the center of the prohibited area multiplied by an intermediate coefficient, the intermediate coefficient being such that the avoidance trajectory passing through these additional points always remains convex.

6. The calculation method according to any of claims 2 to 5, comprising a step of detecting (E0) a prohibited area consisting in calculating on the sphere of attitudes, an angular difference between the pointing axis at the departure point and the center of a prohibited area, a prohibited area being detected as soon as the angular difference is smaller than or equal to the radius of the prohibited area.

7. The calculation method according to any of claims 2 to 6, wherein the determination (E5) of the maneuvers of the satellite so that the pointing axis follows the avoidance trajectory consists in determining the coordinates of the avoidance point, the attitudes of the satellite at the departure and arrival points as well as at said at least one avoidance point, said attitudes being defined by attitude quaternions at the departure and avoidance points and by a velocity and an acceleration at these points.

8. The calculation method according to claim 6, wherein the velocity at the avoidance point (C) is non-zero.

9. The calculation method according to any of the preceding claims, wherein the selection (E6) of the sequence of maneuvers amongst the determined maneuvers consists in selecting, according to a first criterion, the fastest sequence or in selecting, according to a second criterion, the sequence that involves the lowest material constraints or a tradeoff of the first and second criteria.

10. The calculation method according to any of the preceding claims, wherein if the obtained avoidance trajectory (A-C-B) is such that a sighting axis points towards another prohibited area (Zi'), the method comprises a repetition of steps E1) to E6), and possibly recursive, with an initial trajectory (A-C, C-B) thus considering two new independent successive maneuvers, passing through the previously obtained avoidance point (C).

11. A system for avoiding a prohibited area comprising a processor (5) configured to implement a calculation method according to any of the preceding claims.

# FIG. 1

# FIG. 2a

**FIG. 2b**

EP 3 109 722 B1

# FIG. 3

Zi

Zi

Zi

# FIG. 4

```
┌──────────────────────────────────┐
│   ┌──────────────────────────┐    │
│   │            5             │    │
│   └──────────────────────────┘    │
│                                    │
│   ┌──────────────────────────┐    │
│   │           12             │  S │
│   └──────────────────────────┘    │
│                                    │
│   ┌──────────────────────────┐    │
│   │           14             │    │
│   └──────────────────────────┘    │
└──────────────────────────────────┘
```

# FIG. 5

```
┌──────────┐              ┌──────────┐
│    E1    │              │    E5    │
└────┬─────┘              └────┬─────┘
     │                         │
     ▼                         ▼
┌──────────┐              ┌──────────┐
│    E2    │              │    E6    │
└────┬─────┘              └────┬─────┘
     │                         │
     ▼                         ▼
┌──────────┐              ┌──────────┐
│    E3    │              │    E6    │
└────┬─────┘              └──────────┘
     │
     ▼
┌──────────┐
│    E4    │
└──────────┘
```

## FIG. 6

**FIG. 7**

FIG. 8

EP 3 109 722 B1

**FIG. 9a**

**FIG. 9b**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2826470

**Littérature non-brevet citée dans la description**

- **PARRAUD, A. FLIPO ; J. JAUBERT ; G. LASSAL-LE-BALIER.** Computing smooth attitude guidance laws for homing maneuvers. *International Symposium on Space Technology and Science,* 2006